# EUROPEAN PATENT APPLICATION

(11) **EP 4 618 687 A2**
(43) Date of publication of application: **17.09.2025**
(21) Application number: 25172987.7
(22) Date of filing: 28.03.2022
(51) Int. Cl.: H04W 76/27

(54) **TRANSITIONS ASSOCIATED WITH A DEACTIVATED SECONDARY CELL GROUP**

(30) Priority: 30.03.2021 US 202163168081 P
(62) Divisional of application: 22718372.0
(71) Applicant: InterDigital Patent Holdings, Inc., Wilmington, DE 19809 (US)
(72) Inventor: TEYEB, Oumer, Montreal, Quebec, H3C 0X6 (CA); FREDA, Martino, M., Laval, Quebec, H7E 5M4 (CA); NARAYANAN THANGARAJ, Yugeswar, Deenoo, Chalfont, Pennsylvania, 18914 (US)
(74) Representative: AWA Denmark A/S

(57) **Abstract**

Systems, methods, and instrumentalities are described herein regarding Radio Resource Control (RRC) state transitions. The state transitions may be performed with a deactivated Secondary Cell Group (SCG). The WTRU may receive configuration information associated with a transition to a first activity level from a second activity level. The configuration information may indicate one or more conditions associated with determining whether to resume the first activity level with an SCG activated or deactivated. The WTRU may select an SCG activation level to use in association with the first activity level based on the one or more conditions in the configuration information, current WTRU conditions, and current network conditions. The selected SCG activation level may be selected to resume the first activity level with the SCG activated or with the SCG deactivated. The WTRU may indicate, to a base station, the selected SCG activation level.

## Description

### CROSS-REFERENCE TO RELATED APPLICATIONS

This application claims the benefit of Provisional U.S. Patent Application No. 63/168,081, filed March 30, 2021, the disclosure of which is incorporated herein by reference in its entirety.

### BACKGROUND

Mobile communications using wireless communication continue to evolve. A fifth generation may be referred to as 5G. A previous (legacy) generation of mobile communication may be, for example, fourth generation (4G) long term evolution (LTE).

### SUMMARY

Systems, methods, and instrumentalities are described herein regarding Radio Resource Control (RRC) state transitions. The state transitions may be performed with a deactivated Secondary Cell Group (SCG).

A wireless transmit/receive unit (WTRU) may be configured for multi-radio dual connectivity (MR-DC). The WTRU may receive configuration information. The configuration information may be associated with a transition to a first activity level (e.g., an RRC CONNECTED state) from a second activity level (e.g., an RRC INACTIVE state). The configuration information may indicate one or more conditions associated with determining whether to resume the first activity level with an SCG activated or deactivated. The one or more conditions may include at least one of a data-characteristic condition, a radio signal level condition, or a WTRU condition. The data-characteristic condition may include at least one of: whether an uplink (UL) data amount threshold is met; or whether a bearer type associated with UL data is a first bearer type or a second bearer type. The WTRU condition may include at least one of: whether a WTRU battery threshold is met; or whether a WTRU overheating level threshold is met.

The WTRU may transition from the first activity level to the second activity level (e.g., based on receiving a suspension command). The WTRU may transition from the second activity level to the first activity level (e.g., based on the arrival of uplink data). The WTRU may select an SCG activation level to use in association with the first activity level based on the one or more conditions in the configuration information, current WTRU conditions, and current network conditions.

The selected SCG activation level may be selected to resume the first activity level with the SCG activated or selected to resume the first activity level with the SCG deactivated. The WTRU may indicate, to a base station, the selected SCG activation level. The WTRU may indicate, to the base station, at least one of: a cause for the selection of the SCG activation level; or a measurement associated with the selection of the SCG activation level.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 illustrates example processing associated with a WTRU triggered transition from an RRC_ INACTIVE state (e.g., second activity level) to an RRC_CONNECTED state (e.g., first activity level).
FIG. 3 illustrates example features associated with a triggered (e.g., network triggered) transition from an RRC_INACTIVE state (e.g., second activity level) to an RRC_CONNECTED state (e.g., first activity level).
FIG. 4 illustrates an example of selecting an SCG activation level (e.g., an SCG activation state) associated with a transition to a RRC CONNECTED state (e.g., first activity level) from an RRC INACTIVE state (e.g., second activity level), where one or more of the illustrated features may be performed.

### DETAILED DESCRIPTION

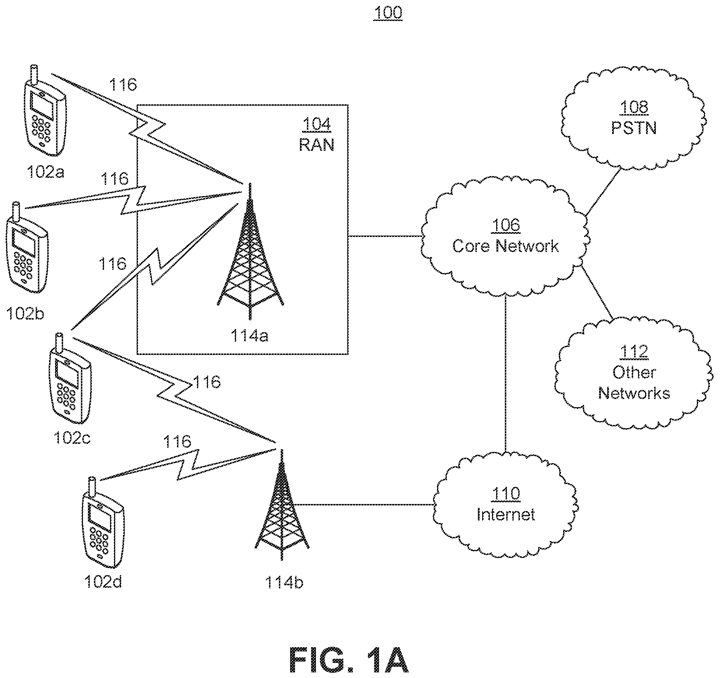

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform (DFT)-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c, and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B (eNB), a Home Node B, a Home eNode B, a gNode B (gNB), a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

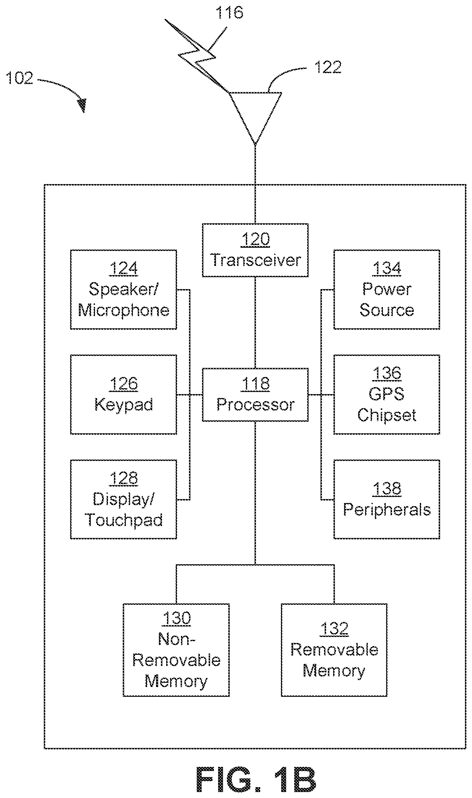

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

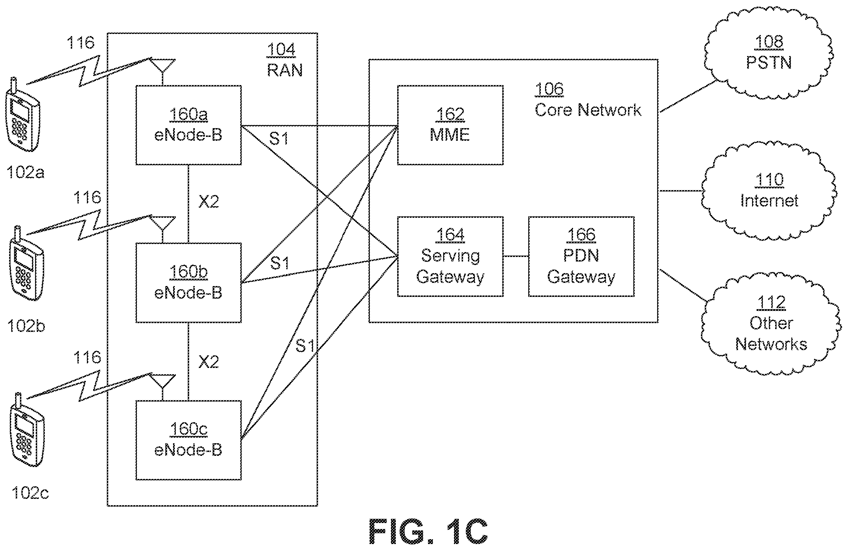

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements is depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports (e.g., only supports) a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

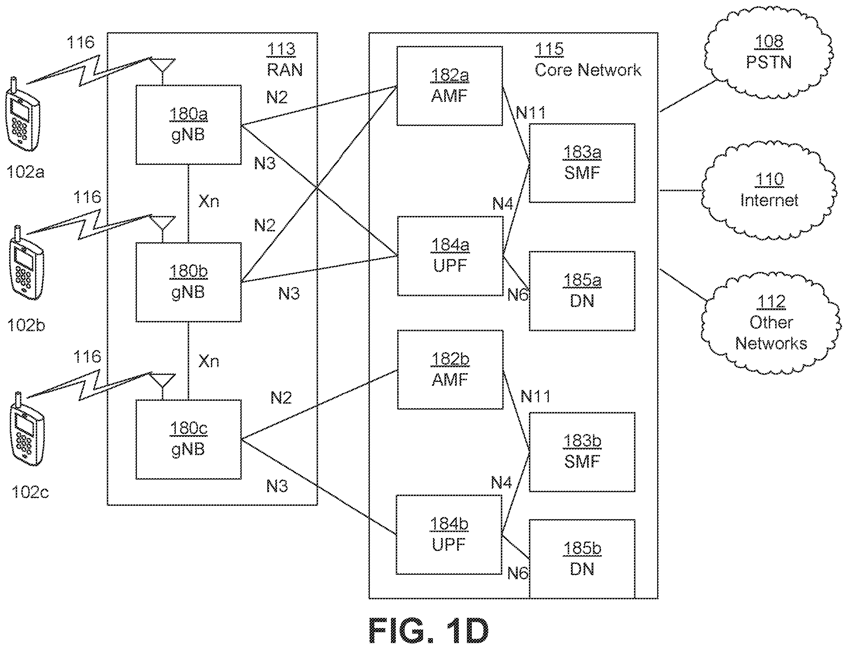

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Reference to a timer herein may refer to determination of a time or determination of a period of time. Reference to a timer expiration herein may refer to determining that the time has occurred or that the period of time has expired. Reference to a timer herein may refer to a time, a time period, tracking the time, tracking the period of time, etc. Reference to a legacy technology or legacy handover, may indicate a legacy technology such as LTE compared to NR, or, a legacy version of a technology, for example an earlier version/release of a technology (e.g., earlier NR release) compared to a later version/release of the technology (e.g., later NR release).

Systems, methods, and instrumentalities are described herein associated with transitions, such as transitions between activity levels, where Radio Resource Control (RRC) state transitions may be used as an illustrative example herein. The state transitions may be performed with a deactivated Secondary Cell Group (SCG).

A wireless transmit/receive unit (WTRU) may be configured for multi-radio dual connectivity (MR-DC). The WTRU may receive configuration information. The configuration information may be associated with a transition to a first activity level (e.g., an RRC CONNECTED state) from a second activity level (e.g., an RRC INACTIVE state). The configuration information may indicate one or more conditions associated with determining whether to resume the first activity level with an SCG activated or deactivated. The one or more conditions may include at least one of a data-characteristic condition, a radio signal level condition, or a WTRU condition. The data-characteristic condition may include at least one of: whether an uplink (UL) data amount threshold is met; or whether a bearer type associated with UL data is a first bearer type or a second bearer type. The WTRU condition may include at least one of: whether a WTRU battery threshold is met; or whether a WTRU overheating level threshold is met.

The WTRU may transition from the first activity level to the second activity level (e.g., based on receiving a suspension command). The WTRU may transition from the second activity level to the first activity level (e.g., based on an arrival of uplink data). The WTRU may select an SCG activation level to use in association with the first activity level based on the one or more conditions in the configuration information, current WTRU conditions, and current network conditions.

The selected SCG activation level may be selected to resume the first activity level with the SCG activated or selected to resume the first activity level with the SCG deactivated. The WTRU may indicate, e.g., to a base station, the selected SCG activation level. The WTRU may indicate, to the base station, at least one of: a cause for the selection of the SCG activation level; or a measurement associated with the selection of the SCG activation level.

A WTRU may be configured to resume from an INACTIVE activity level (e.g., RRC Inactive/RRC INACTIVE state, which may be used as examples herein) to a CONNECTED activity level (e.g., RRC Connected/ RRC CONNECTED state, which may be used as an example herein) with a deactivated or activated SCG.

A WTRU may be configured to save an SCG activation level (e.g., the state of the SCG) when transitioning to a second activity level (e.g., an RRC INACTIVE state). The WTRU may resume (e.g., resume a first activity level, such as RRC CONNECTED state) with the saved SCG activation level (e.g., the saved state of the SCG).

A WTRU may be configured with one or more conditions (e.g., conditions/thresholds) for resuming from the second activity level (e.g., an RRC INACTIVE state) to the first activity level (e.g., an RRC CONNECTED state) with a deactivated SCG or activated SCG. The one or more conditions may include data-characteristic conditions (e.g., load conditions, UL bearer type, UL bearer QoS), radio signal level conditions, or WTRU conditions (e.g., battery level, overheating level, etc.).

A WTRU may determine to resume with a deactivated SCG or activated SCG on transitioning from a second activity level (e.g., an RRC INACTIVE state) to a first activity level (e.g., an RRC CONNECTED state) based on the configured one or more conditions (e.g., conditions/thresholds) and the current state of the WTRU or network. The WTRU may indicate the selected SCG activation level (e.g., SCG state) to the network, e.g., in associated with the resume procedure (e.g., at the start, during the resume, during the completion of the resume procedure, after the completion of the resume procedure).

A WTRU may be configured to take proactive measures or procedures towards the SCG during resumption from the second activity level (e.g., RRC INACTIVE state) to the first activity level (e.g., RRC CONNECTED state) if the WTRU has determined to resume with the SCG activated (e.g., the SCG is activated). The WTRU may perform a random access (RA) procedure (e.g., parallel RA procedure) to the SCG when activating. The WTRU may start sending UL signals (e.g., Channel Quality Indicator (CQI)) for faster activation.

Examples herein may be associated with principles of multi-connectivity. A WTRU may be configured to utilize resources provided by multiple (e.g., two) different nodes, which may be connected via non-ideal backhaul. The nodes may provide access using the same or different radio access technologies (RATs). A first node may act as the master node (MN). The MN may control the resources associated with one or more cells, which may be referred to as Master Cell Group (MCG). A second node may act as the secondary node (SN). The SN may control resources associated with one or more cells, which may be referred to as a Secondary Cell Group (SCG). The MN and SN may be communicatively coupled (e.g., connected) via a network interface. At least the MN may be communicatively coupled (e.g., connected to) the core network.

In examples of dual connectivity, the WTRU may be configured with multiple (e.g., two) medium access control (MAC) entities. One MAC entity may be associated with the MCG, and one MAC entity may be associated with the SCG. The WTRU may be configured to receive and process RRC reconfiguration message(s) via the MCG. The reconfiguration may result in SCG addition, change, modification, or release. The WTRU may be configured to receive and process RRC reconfiguration message(s) via the SCG. The reconfiguration may or may not require coordination with MN.

Examples herein may be associated with the activation and/or the deactivation of SCells, e.g., in NR. NR may support the activation and/or the deactivation of SCells via a medium access control element (MAC CE). If an SCell is deactivated, the WTRU may not perform one or more of (e.g., any) of: transmission of SRS on the SCell; reporting of CSI for the SCell; transmission on UL-SCH; transmission of RACH; monitoring on a physical downlink control channel (PDCCH) on the SCell or for the SCell (e.g., via another activated SCell); or transmission of a physical uplink control channel (PUCCH). A WTRU may be activated/deactivated via a MAC CE activation/deactivation command. A WTRU may (e.g., may also) move from activated to deactivated following the expiration of an SCell deactivation timer.

Examples herein may be associated with dormancy on SCells. Dormancy may provide a more dynamic mechanism for supporting power savings on SCells. For dormancy, the WTRU may maintain some of the functionality of an activated SCell and may save power by not performing PDCCH monitoring. Dormancy may be achieved by switching (e.g., via L1 signaling using DCI) a WTRU to a dormant bandwidth part (BWP). If on the dormant BWP, the WTRU may operate as follows: not transmitting SRS; reporting channel state information (CSI) (e.g., periodic (e.g., only periodic) and semi-static); not monitoring PDCCH on the SCell or for the SCell; performing beam management and beam failure recovery procedure; not transmitting on a PUCCH; and not transmitting on a random access channel (RACH). Dormancy may be associated with an activated SCell state. A WTRU may be changed to a dormant BWP if it is in an SCell active state. A WTRU may or may not be changed to or from a dormant BWP while in an SCell deactivated state. A DCI associated with another SCell may move an SCell from the dormant BWP to a non-dormant BWP.

Examples herein may be associated with SCG dormancy (e.g., SCG/PSCell deactivation). SCG dormancy (e.g., SCG/PSCell deactivation) may include putting the SCG (e.g., the entire PSCell and SCG SCells) in a power saving state if the WTRU does not have the need for the SCG (e.g., if the aggregate data rate of the WTRU bearers are below a certain level, or if the SCG radio quality may not be satisfactory). The SCG may be reactivated from dormancy (e.g., quickly reactivated) if the need arises. This may be accomplished using one or more of the following: adopting the SCell dormancy behavior to the PSCell which may include associating a dormant BWP to the PSCell; having the WTRU effectively operate in single connectivity with the SCG configuration stored and ready to be activated/applied if the need arises; or operating the SCG in a long DRX.

SCG dormancy (e.g., SCG/PSCell deactivation) may include at least one of the following: a single (e.g., only a single) deactivated SCG; no PDCCH monitoring being performed while the SCG is deactivated (e.g., PDCCH monitoring may be reconsidered later); MN configured RRM measurements/reporting (e.g., which may or may not be affected by SCG activation/deactivation) and MN/SN configured measurements on deactivated SCG (e.g., restrictions, relaxations, mobility procedure, etc. may be applied); no SRS transmission on SCG being performed while the SCG is deactivated (e.g., SRS transmission on SCG may be reconsidered later); a RACH for SCG reactivation; a SCG activation level (e.g., activation state, activated state/deactivated state) configured at PSCell addition/change, RRC resume, or HO; and while the SCG is deactivated (e.g., in a deactivated state), the WTRU sends SN configured measurements embedded in an MCG ULInformationTransferMRDC message via SRB1, the WTRU receives an SCG RRCReconfiguration message embedded in an MCG RRC(Connection)Reconfiguration message on SRB1, SCG SCells are not in an active state (e.g., only in a deactivated state, if dormancy is allowed), and SCells are added/reconfigured/released.

Examples herein may be associated with an activity level associated with a WTRU being inactive (e.g., an inactive state, where RRC_INACTIVE state may be used as an example herein). The RRC_INACTIVE state (e.g., second activity level) may be a state where a WTRU remains in CM-CONNECTED and may move within an area configured by NG-RAN (the RAN notification area (RNA)) without notifying NG-RAN. The RRC_INACTIVE state (e.g., the second activity level) may be a compromise between the ACTIVE/CONNECTED state and the IDLE state, where the WTRU may have almost the same power saving benefits of the IDLE state but may be brought back quickly to the connected state if the need arises (e.g., when UL/DL data concerning that WTRU arrives).

If a WTRU is suspended to an RRC INACTIVE state (e.g., the second activity level), it may be allocated an inactive radio network temporary identifier (I-RNTI) by the last serving gNB. The I-RNTI may include a WTRU specific part (e.g., cell radio network temporary identifier (CRNTI) used in the cell if the WTRU was suspended) and a network specific part (e.g., ID of the gNB that was hosting the cell if the WTRU was suspended). The last serving gNB node may keep the WTRU context and the WTRU-associated NG connection with the serving AMF and UPF.

A WTRU in the RRC_INACTIVE state (e.g., the second activity level) may be configured by the last serving gNB with an RNA (RAN notification area), where: the RNA may cover a single or multiple cells, and may be included within the CN registration area; and/or a RAN-based notification area update (RNAU) may be periodically sent by the WTRU and may (e.g., may also) be sent if the cell reselection procedure of the WTRU selects a cell that does not belong to the configured RNA.

The RNA may be configured using a list of cells and/or a list of RAN areas. The list of cells may be provided to a WTRU. The list of cells may include an explicit list of cells (e.g., one or more cells) that constitute the RNA. With respect to the list of RAN areas, the WTRU may be provided with at least one RAN area ID. A RAN area may be a subset of a CN Tracking Area (TA) or equal to a CN TA. A RAN area may be specified by a RAN area ID. The RAN area ID may include a type allocation code (TAC) and optionally a RAN area code. A cell may broadcast one or more RAN area IDs in the system information.

The RNAU may be performed via a resume procedure. In examples, a WTRU may send an RRC Resume Request with a cause value indicating RNAU, and the network may respond with an RRC Release.

If the last serving gNB receives DL data from the UPF or DL WTRU-associated signaling from the AMF while the WTRU is in the RRC_INACTIVE state (e.g., the second activity level), the gNB may page in the cells corresponding to the RNA and may send XnAP RAN paging to neighbor gNB(s) (e.g., if the RNA includes cells of neighbor gNB(s)).

If the WTRU resumes (e.g., in a cell/gNB different from where it was suspended), the WTRU may provide the I-RNTI in the resume request. The target gNB may be able to identify the source gNB from the network specific part of the C-RNTI and may send the context fetch request to the source node.

A WTRU configured with MR-DC may keep an SCG lower layer and bearer configuration when entering the RRC INACTIVE state (e.g., second activity level). If the WTRU resumes (e.g., may be transitioned to the RRC CONNECTED state/first activity level), the network may configure the WTRU to resume with or without the SCG, e.g., in the RRCResume message.

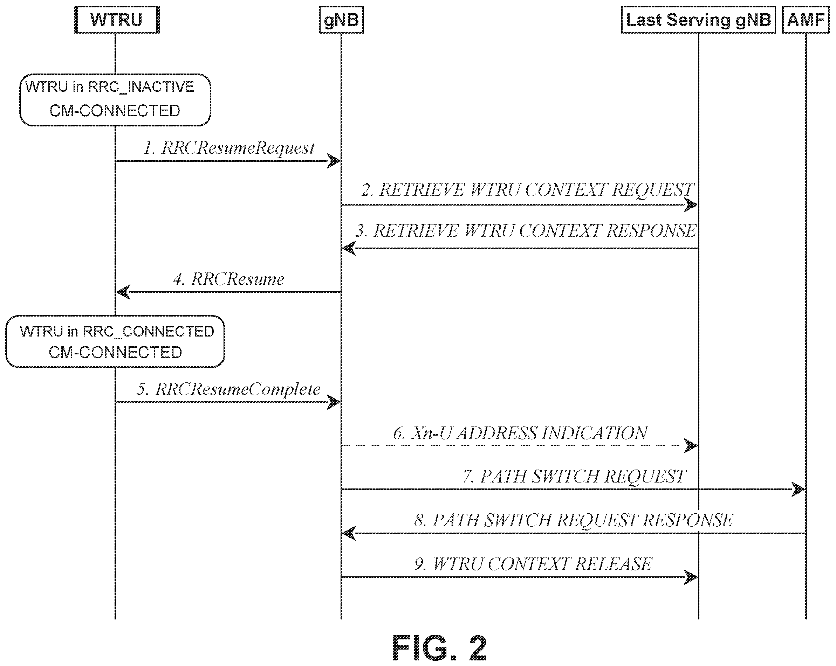

FIG. 2 illustrates example processing associated with a WTRU triggered transition from an RRC_ INACTIVE state (e.g., second activity level) to an RRC_CONNECTED state (e.g., first activity level).

Referring to FIG. 2, at 1, the WTRU may resume from an RRC_INACTIVE state (e.g., a second activity level) and may send an RRCResumeRequest to the gNB. The request may provide an I-RNTI that may have been allocated by the last serving gNB. The gNB that received the request from the WTRU may attempt to resolve the identity of the gNB contained in the I-RNTI.

At 2, if the gNB is able to resolve the gNB identity included in the I-RNTI, the gNB may request that the last serving gNB provide WTRU context data. The request may be received at the last serving gNB.

At 3, the last serving gNB may retrieve the WTRU context data and may send the context data to the requesting gNB.

At 4, the gNB that requested and received the context data may communicate the context data to the WTRU. The WTRU may resume an RRC_CONNECTED state (e.g., a first activity level).

At 5, the WTRU may request to complete resumption of the RRC connection (e.g., send a resume complete message). The request may be an RRCResumeComplete message. The WTRU may multiplex user data with the request, e.g., if the UL grant provided by the gNB allows.

At 6, if loss of DL user data buffered in the last serving gNB is prevented, the gNB may provide forwarding addresses.

At 7, the gNB may perform a path switch. The gNB may generate and send a path switch request. The request may be received at an AMF.

At 8, the AMF may send a path switch request response to the gNB.

At 9, the gNB may trigger the release of the WTRU resources at the last serving gNB.

If the WTRU triggered the resume procedure for RAN area update, the network may respond to the RRC Resume request with an RRC Release message and the procedure may end.

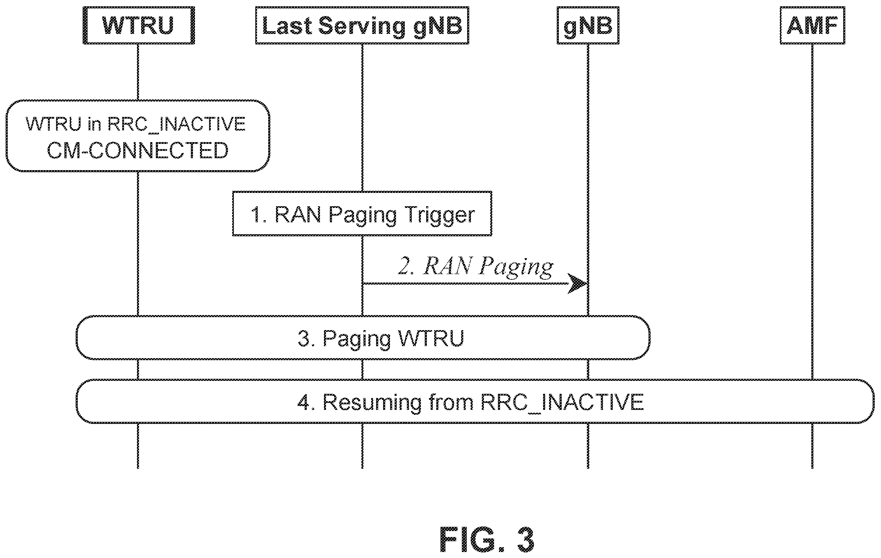

FIG. 3 illustrates example features associated with a triggered (e.g., network triggered) transition from an RRC_INACTIVE state (e.g., second activity level) to an RRC_CONNECTED state (e.g., first activity level).

At 1, a RAN paging trigger event (e.g., incoming DL user plane, DL signaling from 5GC, etc.) may occur.

At 2, RAN paging may be triggered. The paging may be triggered in (e.g., only in) the cells controlled by the last serving gNB. The paging may be triggered (e.g., also be triggered) by means of Xn RAN paging in cells controlled by other gNBs (e.g., configured to the WTRU in the RNA).

At 3, the WTRU may be paged with the I-RNTI.

At 4, if the WTRU has been successfully reached, the WTRU may attempt to resume from the RRC_INACTIVE state (e.g., the second activity level). Thereafter, processing may be the same or similar to a WTRU triggered transition such as one involving sending the RRC Resume Request, etc.

Mobility may be supported with a deactivated SCG. Examples of behavior when transiting to an RRC INACTIVE state (e.g., second activity level) while the SCG is deactivated are provided herein.

Starting with an activated SCG and deactivating the SCG a short time after determining that SCG deactivation is required or desired may lead to unnecessary signaling and power consumption at the WTRU (e.g., if the WTRU experiences frequent state transitions due to the bursty nature of the WTRU traffic, battery level, or overheating which may remain unchanged or become worse during state transition, etc.).

Examples provided herein may be associated with RRC state transition with a deactivated SCG. The examples may be implemented in connection with NR features such as NR dual connectivity carrier aggregation (DCCA).

Several examples are disclosed for enhanced RRC state transitions from an RRC CONNECTED state (e.g., a first activity level) to an RRC INACTIVE state (e.g., a second activity level) and vice versa, which may take SCG deactivation into consideration. The techniques may be applicable to any kind of dual connectivity, e.g., MR-DC, where the MN may be LTE or NR node. The SN may (e.g., may also) employ NR or LTE.

The terms deactivated SCG and dormant SCG may be used interchangeably. The terms signal and message may be used interchangeably. The terms MN and MCG may be used interchangeably. The terms SN and SCG may be used interchangeably. The terms suspended WTRU and a WTRU in an RRC INACTIVE state (e.g., second activity level) may be used interchangeably. The terms SCG activation level and SCG activation state may be used interchangeably.

The WTRU may save/may be instructed to save the SCG's activation level (e.g., the SCG activation state, for example activated or deactivated) when transitioning to the RRC INACTIVE state (e.g., the second activity level) from the RRC CONNECTED state (e.g., the first activity level). The SCG activation level (e.g., the SCG activation state) may include an activated SCG (e.g., the SCG in an activated state) or a deactivated SCG (e.g., the SCG in a deactivated state). The transition to the RRC INACTIVE state (e.g., the second activity level) from the RRC CONNECTED state (e.g., the first activity level) may be based on receiving a suspension command. In examples, the WTRU may rely on default behavior (e.g., the WTRU may store the SCG's state as deactivated in the WTRU inactive AS context or the WTRU may store the SCG's activation level (e.g., the SCG's activation state). In examples, the WTRU may use an indication in the RRC Release message that indicates whether the SCG's activation level (e.g., SCG's activation state) is to be stored in the WTRU inactive AS context.

The SCG being deactivated (e.g., the SCG being in a deactivated state) may be kept by the WTRU if a deactivation was triggered by the WTRU (e.g., due to low battery or low UL data traffic to SCG bearers, etc.), e.g., before the WTRU becomes suspended. The SCG being deactivated (e.g., the SCG being in a deactivated state) may be kept by the WTRU if a deactivation was triggered by the network, e.g., before the WTRU becomes suspended. The SCG being deactivated (e.g., the SCG being in a deactivated state) may be kept by the WTRU based on an indication (or a lack of indication) in the RRC Release message that suspends the WTRU to the RRC INACTIVE state (e.g., the second activity level).

A WTRU may be configured to receive configuration information (e.g., explicit configuration information) from the network to resume the SCG in a given SCG activation level (e.g., SCG activation state) if resuming to the RRC CONNECTED state (e.g., the first activity level) from the RRC INACTIVE state (e.g., the second activity level). The configuration information may indicate one or more conditions associated with determining (e.g., selecting) which SCG activation level (e.g., the SCG activation state) to resume in. The WTRU may receive an indication from the network indicating which SCG activation level (e.g., the SCG activation state), for example activated or deactivated, should be used if the WTRU resumes. The SCG activation level (e.g., the SCG activation state) may include an activated SCG (e.g., the SCG in an activated state) or a deactivated SCG (e.g., the SCG in a deactivated state). The WTRU may receive the indication from the network in the RRC Release message if the WTRU is suspended (e.g., receives a suspension command). The network may indicate to the WTRU to resume with the determined (e.g., selected) SCG activation level (e.g., SCG activation state) if subsequently resuming based on the one or more conditions in the configuration information, current WTRU conditions, and/or current network conditions. The WTRU may obtain this indication in the Random Access Response (RAR) message in response to the RA that the WTRU sent to initiate the resume procedure. The WTRU may obtain this indication in the RRC Resume message if the WTRU is resumed.

The WTRU may receive configuration information from the network for the WTRU to indicate an SCG activation level (e.g., an SCG activation state) implicitly when resuming from the RRC INACTIVE state (e.g., the second activity level) to the first activity level (e.g., RRC_CONNECTED). The SCG activation level (e.g., the SCG activation state) may include an activated SCG (e.g., the SCG in an activated state) or a deactivated SCG (e.g., the SCG in a deactivated state). The WTRU may be configured with two I-RNTIs during suspension (e.g., in RRC Release message), one corresponding to a deactivated SCG and the other corresponding to an activated SCG. The WTRU, depending on its preference or pre-configured conditions (e.g., as may be described in examples herein), may use the I-RNTI corresponding to a SCG activation level (e.g., SCG activation state) during the next resume request, where the SCG activation level indicated by the selected I-RNTI may indicate a selected or preferred SCG activation level.

The WTRU may receive configuration information (e.g., using RRC Release, RRC Reconfiguration message) with a one or more preambles to use for RA when resuming. Some of the preambles may be used for indicating preference for a deactivated SCG. Some of the preambles may be used for indicating preference for an activated SCG. The preambles may be specified explicitly (e.g., preamble x may be used for indicating resume with the SCG deactivated, preamble y may be used for indicating resume with the SCG activated). The preambles may be categorized using some mechanism (e.g., odd preambles may be used for SCG activation while even preambles used for SCG deactivation, preambles below a certain value may be used for SCG deactivation while those above used for SCG activation, etc.). The WTRU, depending on its preference or pre-configured conditions (e.g., as described in examples herein), may use the preamble (or one of the preambles, if more than one preamble may be configured) corresponding to its SCG activation level/preferred SCG activation level (e.g., SCG activation state) in the RA message in the next resume request.

The WTRU may be configured to receive conditional configuration information from the network to resume the SCG in a given SCG activation level (e.g., SCG activation state) if resuming from the RRC INACTIVE state (e.g., the second activity level) to the RRC_CONNECTED state (e.g., first activity level). The WTRU may receive conditional configuration information from the network indicating condition(s) to use to determine which SCG activation level (e.g., SCG activation state) to use if the WTRU resumes. The SCG activation level (e.g., the SCG activation state) may include an activated SCG (e.g., the SCG in an activated state) or a deactivated SCG (e.g., the SCG in a deactivated state).

A condition to resume with the SCG deactivated or activated may depend on the radio conditions (e.g., radio signal level conditions) towards the MN or/and the SN. The condition to resume may be SCG deactivated if: the signal level/quality (e.g., RSRP/RSRQ/RNSI) towards the SN is below a certain threshold; the signal level/quality (e.g., RSRP/RSRQ/RSNI) towards the MN is above a certain threshold; or the signal level/quality (e.g., RSRP/RSRQ/RSNI) towards the MN is stronger than the level/quality towards the SN by a certain threshold. A condition to resume with SCG activated may be if: the signal level/quality (e.g., RSRP/RSRQ/RNSI) towards the SN is above a certain threshold; the signal level/quality (e.g., RSRP/RSRQ/RSNI) towards the MN is below a certain threshold; the signal level/quality (e.g., RSRP/RSRQ/RSNI) towards the MN is lower than the level/quality towards the SN by a certain threshold.

A condition to resume with the SCG deactivated or activated may depend on the cause for resuming. The WTRU may resume with SCG deactivated if: the resume is due to a paging (e.g., arrival of DL data); the resume is due to arrival of UL data that belongs to an MCG bearer (e.g., MN terminated MCG bearer, SN terminated MCG bearer); or the resume is due to arrival of UL data that belongs to a split bearer with MCG as the primary path. The WTRU may resume with SCG activated if: the resume is due to a paging (e.g., arrival of DL data); the resume is due to arrival of UL data that belongs to an SCG bearer (e.g., MN terminated SCG bearer, SN terminated SCG bearer); or the resume is due to arrival of UL data that belongs to a split bearer with SCG as the primary path.

The condition to resume with the SCG deactivated or activated may depend on local condition(s) at the WTRU (e.g., WTRU condition(s)). The WTRU may resume with the SCG deactivated if: the WTRU battery level is below a certain threshold; the WTRU overheating level is above a certain threshold; the WTRU mobility level is above a certain level (e.g., high mobility); or, for UL triggered resume, data-characteristic condition(s) such as if the pending UL data is below a certain threshold or the UL data belongs to a bearer with a given QoS (e.g., non GBR bearer, GBR bearer with a bit rate below a certain threshold). The condition may resume with SCG activated if: the WTRU battery level is above a certain threshold; the WTRU overheating level is below a certain threshold; the WTRU mobility level is below a certain level (e.g., high mobility); or, for UL triggered resume, data-characteristic condition(s) such as if the pending UL data is above a certain threshold, the UL data may belong to a bearer with a given QoS (e.g., GBR bearer with a bit rate above a certain threshold), or the UL data may belong to a bearer that may be configured for duplication.

A network may configure the WTRU to determine the SCG activation level (e.g., SCG activation state) depending on the WTRU battery level, but the threshold (e.g., exact thresholds) may be determined by the WTRU without being configured/indicated by the network.

The WTRU may be configured to indicate a selected or preferred SCG activation level (e.g., SCG activation state) if initiating the resume procedure. If the WTRU initiates the resume procedure from an RRC INACTIVE state (e.g., the second activity level), it may indicate to the network to keep the SCG deactivated. This may be either based on WTRU preference or one of the configurations discussed herein (e.g., depending on radio conditions, data type/level, WTRU conditions such as power/overheating levels, etc.).

The WTRU may indicate that it has determined to resume with a deactivated SCG by including an indicator in the RRC Resume Request message (e.g., a Boolean flag with a value of 0). The WTRU may indicate that it has determined to resume with an activated SCG by including an indicator in the RRC Resume Request message (e.g., a Boolean flag with a value of 1).

The lack of an additional indicator in the RRC Resume Request message about the state of the SCG may indicate that the WTRU has determined to resume with a deactivated SCG. The lack of an additional indicator in the RRC Resume Request message about the state of the SCG may indicate that the WTRU has determined to resume with an activated SCG. The WTRU may indicate that it has determined to resume with a deactivated SCG by including an indicator in the RA message preceding the sending of the RRC Resume Request message.

The WTRU may (e.g., additionally) include the cause for requesting (e.g., selecting) the SCG activation level (e.g., the SCG activation state) to be deactivated/activated (e.g., due to radio conditions, due to bearer type, data volume, battery level, overheating, etc.). The additional information may indicate the cause, and/or may include detailed information (e.g., measurement results if the reason may be radio conditions, battery level if the reason may be battery level, etc.).

The WTRU may indicate a selected or preferred SCG activation level (e.g., the SCG activation state) as part of the resume procedure (e.g., as part of completing the resume procedure). If the WTRU completes the resume procedure from an RRC INACTIVE state (e.g., second activity level), it may indicate to the network to keep the SCG deactivated.

The WTRU may indicate that it has determined to resume with a deactivated SCG by including an indicator in the RRC Resume Complete message (e.g., a Boolean flag with a value of 0). The WTRU may indicate that it has determined to resume with an activated SCG by including an indicator in the RRC Resume Complete message (e.g., a Boolean flag with a value of 1).

The lack of an additional indicator in the RRC Resume Complete message about the state of the SCG may indicate that the WTRU has determined to resume with a deactivated SCG. The lack of an additional indicator in the RRC Resume Complete message about the state of the SCG may indicate that the WTRU has determined to resume with an activated SCG.

The WTRU may indicate information (e.g., additional information) regarding the reason for preference or selection for SCG deactivation or activation. The WTRU, when indicating the SCG activation level (e.g., SCG activation state) via one or more examples described herein, may (e.g., may also) include the reason for requesting the SCG to be deactivated/activated (e.g., due to radio conditions, due to bearer type, data volume, battery level, overheating, etc.).

The WTRU may include information (e.g., additional information) regarding the reason for SCG deactivation/activation preference or selection. If the reason to request SCG deactivation was radio conditions to the MN or SN, the WTRU may include the measurement results towards the MN or/and SN. If the WTRU were to request SCG deactivation due to low battery level, the WTRU may include the current WTRU battery level, etc.

The WTRU may be configured to perform RA (e.g., directly) to the SCG. If the WTRU is configured to select or indicate a preference for the SCG be activated (e.g., based on the examples described herein or WTRU implementation), it may start (e.g., resume) the RA towards the SN in parallel with initiating the resume procedure towards the MN.

The WTRU may be configured to perform resuming (e.g., directly resuming) to the SCG. The WTRU may initiate the resumption towards the SCG, even if it was camping at one of the cells of the MCG, if its selection or preference is the SCG being activated when resuming the RRC CONNECTED state (e.g., the first activity level). In some examples, the WTRU may initiate the resumption towards the SCG, if additional conditions are also fulfilled such as the radio conditions (e.g., radio signal level conditions) towards the SCG being above a certain level. The WTRU, if configured, may use the I-RNTI associated with SCG activation, on resuming (e.g., directly resuming) to the SCG. The WTRU, if configured, may use the RA preamble (or one of the preambles) associated with SCG activation, on resuming (e.g., directly resuming) to the SCG.

The WTRU may be configured with an aspect related to a resume (e.g., a 2-step resume) for RAN area update. If the WTRU initiates the resumption for a RAN area update (e.g., RAN area periodic update timer expiration, re-selection to a cell not belonging to the configured RAN area, etc.), then the WTRU may refrain from performing activities or procedures related to activating the SCG (e.g., RA to the SCG, sending of CQI or other UL reference signals, etc.), e.g., even if, based on one or more examples herein, the WTRU has determined that it may resume with an activated SCG.

A WTRU may be configured to save the SCG activation level (e.g., the SCG activation state) when suspending to the RRC INACTIVE STATE (e.g., the second activity level). The WTRU may be configured with conditions to start (e.g., resume) with the SCG deactivated or activated, and with one or more conditions that indicate that the WTRU select or indicate a preference for an SCG activation level (e.g., the SCG activation state) if resuming (e.g., to a first activity level). A WTRU configured for MR-DC with an MCG and an SCG, and configured with an SCG that may be deactivated, may perform the examples herein.

If transitioning from an RRC CONNECTED state (e.g., first activity level) to RRC INACTIVE state (e.g., second activity level) (e.g., when receiving of RRC Release message), the WTRU may save the SCG activation level (e.g., the SCG activation state). The SCG activation level (e.g., the SCG activation state) may be an activated SCG (e.g., the SCG in an activated state) or a deactivated SCG (e.g., the SCG in a deactivated state). The saving of the SCG activation level (e.g., the SCG activation state) may be dependent on at least one of the following: an indication from the network in the RRC Release message; a pre-configuration before the reception of the RRC release message, either via dedicated or broadcast signaling; or if SCG was deactivated, the reason why SCG was deactivated (e.g., to save the state if deactivation was due to low battery).

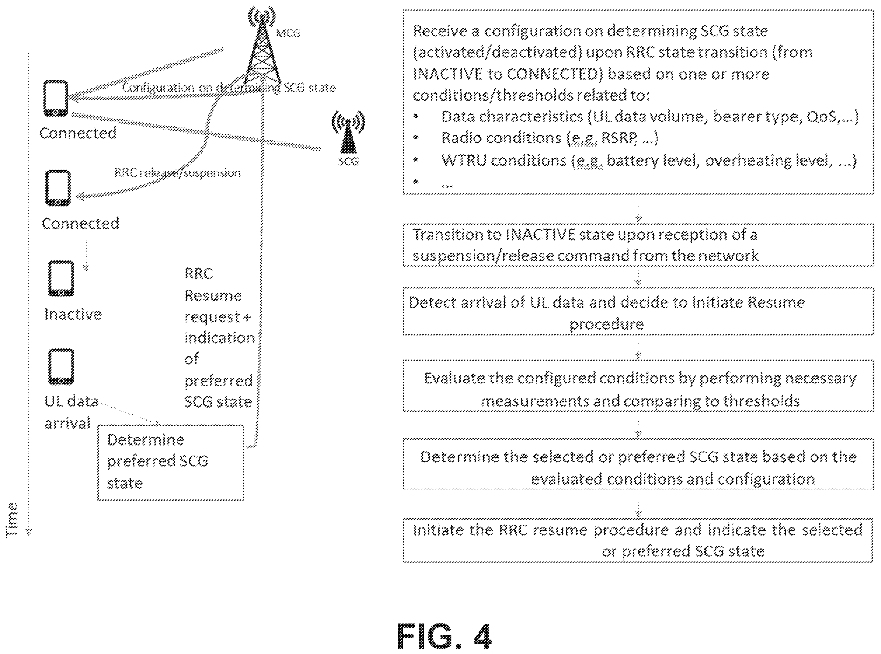

FIG. 4 illustrates an example of selecting an SCG activation level (e.g., an SCG activation state) associated with a transition to a RRC CONNECTED state (e.g., first activity level) from an RRC INACTIVE state (e.g., second activity level), where one or more of the illustrated features may be performed. The WTRU may receive configuration information from the network. The configuration information may be associated with transition to a RRC CONNECTED state (e.g., first activity level) from an RRC INACTIVE state (e.g., second activity level). The configuration information may indicate one or more conditions to determine (e.g., select and/or indicate a preference for) the SCG activation level (e.g., the SCG activation level) state if resuming (e.g., subsequently resuming) to the RRC CONNECTED state (e.g., the first activity level). The SCG activation level (e.g., the SCG activation state) may include an activated SCG (e.g., the SCG in an activated state) or a deactivated SCG (e.g., the SCG in a deactivated state). The one or more conditions to determine the SCG activation level (e.g., SCG activation state) may include whether a saved SCG activation level is SCG activated or SCG deactivated (e.g., resume with activated SCG if the SCG was active when the WTRU was suspended, resume with deactivated SCG if the SCG was deactivated when the WTRU was suspended). The one or more conditions to determine the SCG activation level (e.g., SCG activation state) may include whether a reason for triggering of the resume satisfies a condition. For example, if the resume to the RRC CONNECTED state (e.g., the first activity level) is triggered by arrival of the UL data, the reason for the trigger may include data characteristic conditions such as at least one of: the amount of UL data satisfying a threshold (e.g., resume with SCG deactivated if UL data volume is below a certain threshold); the QoS of the UL data satisfies a condition (e.g., resume with SCG deactivated if UL data belongs to a non GBR bearer); or the bearer type satisfies a condition (e.g., resume with SCG deactivated if UL data belongs to an MCG bearer or a split bearer with MCG as the primary path). The one or more conditions to determine the SCG activation level (e.g., the SCG activation state) may include whether radio conditions towards the MCG or/and SCG satisfy condition(s) (e.g., resume with SCG deactivated if signal quality towards the SCG is below a certain threshold). The one or more conditions to determine the SCG activation level (e.g., the SCG activation state) may include WTRU conditions such as a battery level at the WTRU satisfies a condition(s) (e.g., resume with SCG deactivated if the battery level is below a certain threshold) or the WTRU overheating level satisfies a condition(s) (e.g., resume with SCG deactivate if the WTRU overheating level is above a certain threshold).

If transitioning from an RRC INACTIVE state (e.g., a second activity level) to an RRC CONNECTED state (e.g., a first activity level) (e.g., via arrival of UL data, RAN or CN paging indicating arrival of DL data, etc.), the WTRU may determine (e.g., select and/or indicate a preference for) to resume with an activated SCG or a deactivated SCG (e.g., the SCG in the activated or deactivated state), depending on the configured conditions, current WTRU conditions, and current network conditions. The WTRU may indicate the determination (e.g., the selection and/or indication of the preference for) to the network (e.g., base station), where the indication may be one or more of the following: an indication in the RA procedure at the state of the resume procedure (e.g., using a preconfigured preamble(s) to indicate preference to start (e.g., resume) with the SCG deactivated or activated); an indication in the RRC Resume Request message which may be an explicit indication (e.g., a Boolean flag set to TRUE for deactivated SCG or FALSE for activated SCG, or vice versa) or an implicit indication (e.g., using different I-RNTI values for indicating to be resumed with SCG activated or deactivated); or an indication in the RRC Resume Complete message.

The WTRU (e.g., in addition to the indication) may include the cause for indicating (e.g., selecting and/or indicating the preference for) the deactivated or the activated SCG (e.g., measurement results, BSR, battery level, overheating level, etc.).

If the WTRU determines to start (e.g., resume) with the SCG in activated state, the WTRU may perform one or more of the following: start RA towards the SCG (e.g., in parallel with the RA with the MCG); or start to send faster CQIs for the PSCell (and SCG SCells) for faster activation of the SCG.

A WTRU may be configured to resume with a given SCG activation level (e.g., SCG activation state). A WTRU configured for MR-DC with an MCG and an SCG, configured with an SCG that may be deactivated, and currently operating in the RRC INACTIVE state (e.g., second activity level), may receive an indication from the network to resume with the SCG activated or deactivated (e.g., in the SCG activated or deactivated state). The indication may include one or more of the following: an indication in the RRC Release message if the WTRU may be suspended; a pre-configuration before the reception of the RRC Release message, either via dedicated or broadcast signaling; a broadcast indication while the WTRU may be in INACTIVE state; an indication in the RAN or CN paging (e.g., in case activation was due to arrival of DL data) received while the WTRU is in INACTIVE state; an indication in the Random-Access Response (RAR) message during the RA phase of the resume procedure; or an indication in the RRC Resume message.

The indication from the network to resume with the SCG activated or deactivated (e.g., in the SCG activated or deactivated state) may include an explicit indication (e.g., a Boolean flag in the RRC Resume message set to TRUE for deactivated SCG or FALSE for activated SCG, or vice versa) or an implicit indication (e.g., a preconfigured value or range of values in the RAR message that may be associated with a deactivated/activated SCG).

Although features and elements described herein are described in particular combinations, each feature or element may be used alone without the other features and elements of the preferred embodiments, or in various combinations with or without other features and elements.

The description herein may be provided for exemplary purposes and does not limit in any way the applicability of the described systems, methods, and instrumentalities to other wireless technologies and/or to wireless technology using different principles, when applicable. The term network in this disclosure may refer to one or more gNBs which in turn may be associated with one or more Transmission/Reception Points (TRPs) or any other node in the radio access network.

Although the implementations described herein may consider 3GPP specific protocols, it is understood that the implementations described herein are not restricted to this scenario and may be applicable to other wireless systems. For example, although the solutions described herein consider LTE, LTE-A, NR or 5G specific protocols, it is understood that the solutions described herein are not restricted to this scenario and are applicable to other wireless systems as well.

The processes described herein may be implemented in a computer program, software, and/or firmware incorporated in a computer-readable medium for execution by a computer and/or processor. Examples of computer-readable media include, but are not limited to, electronic signals (transmitted over wired and/or wireless connections) and/or computer-readable storage media. Examples of computer-readable storage media include, but are not limited to, a read only memory (ROM), a random access memory (RAM), a register, cache memory, semiconductor memory devices, magnetic media such as, but not limited to, internal hard disks and removable disks, magneto-optical media, and/or optical media such as compact disc (CD)-ROM disks, and/or digital versatile disks (DVDs). A processor in association with software may be used to implement a radio frequency transceiver for use in a WTRU, terminal, base station, RNC, and/or any host computer.

### ENUMERATED EXEMPLARY EMBODIMENTS

### List of Embodiments:

1. A wireless transmit/receive unit (WTRU), comprising:
   a processor configured to:
   receive configuration information, wherein the configuration information is associated with a transition to a first activity level from a second activity level, and wherein the configuration information indicates one or more conditions associated with determining whether to resume the first activity level with an SCG activated or deactivated;
   transition from the first activity level to the second activity level;
   transition from the second activity level to the first activity level;
   select an SCG activation level to use based on the one or more conditions in the configuration information, current WTRU conditions, and current network conditions, wherein the selected SCG activation level is selected to resume the first activity level with the SCG activated or selected to resume the first activity level with the SCG deactivated; and
   indicate, to a base station, the selected SCG activation level.
2. The WTRU of EEE 1, wherein the one or more conditions associated with determining whether to resume the first activity level with an SCG activated or deactivated comprise at least one of: a data-characteristic condition, a radio signal level condition, or a WTRU condition.
3. The WTRU of EEE 2, wherein the data-characteristic condition comprises at least one of:
   whether an uplink (UL) data amount threshold is met; or
   whether a bearer type associated with UL data is a first bearer type or a second bearer type.
4. The WTRU of EEE 2, wherein the WTRU condition comprises at least one of:
   whether a WTRU battery level threshold is met; or
   whether a WTRU overheating level threshold is met.
5. The WTRU of EEE 1, wherein the processor is further configured to:
   receive a suspension command from the base station, wherein the transition from the first activity level to the second activity level is based on receiving the suspension command.
6. The WTRU of EEE 1, wherein the processor is further configured to:
   detect an arrival of UL data, wherein the transition from the second activity level to the first activity level is based on the arrival of UL data.
7. The WTRU of EEE 1, wherein the first activity level is an RRC CONNECTED state and the second activity level is an RRC INACTIVE state.
8. The WTRU of EEE 1, wherein the processor is further configured to indicate, to the base station, at least one of:
   a cause for the selected SCG activation level; or
   a measurement associated with the selected SCG activation level.
9. A method implemented in a wireless transmit/receive unit (WTRU), comprising:
   receiving configuration information, wherein the configuration information is associated with a transition to a first activity level from a second activity level, and wherein the configuration information indicates one or more conditions associated with determining whether to resume the first activity level with an SCG activated or deactivated;
   transitioning from the first activity level to the second activity level;
   transitioning from the second activity level to the first activity level;
   selecting an SCG activation level to use based on the one or more conditions in the configuration information, current WTRU conditions, and current network conditions, wherein the selected SCG activation level is selected to resume the first activity level with the SCG activated or selected to resume the first activity level with the SCG deactivated; and
   indicating, to a base station, the selected SCG activation level.
10. The method of EEE 9, wherein the one or more conditions associated with determining whether to resume the first activity level with an SCG activated or deactivated comprise at least one of: a data-characteristic condition, a radio signal level condition, or a WTRU condition.
11. The method of EEE 10, wherein the data-characteristic condition comprises at least one of:
   whether an uplink (UL) data amount threshold is met; or
   whether a bearer type associated with UL data is a first bearer type or a second bearer type.
12. The method of EEE 10, wherein the WTRU condition comprises at least one of:
   whether a WTRU battery level threshold is met; or
   whether a WTRU overheating level threshold is met.
13. The method of EEE 9, further comprising:
   receiving a suspension command from the base station, wherein the transition from the first activity level to the second activity level is based on receiving the suspension command.
14. The method of EEE 9, wherein the first activity level is an RRC CONNECTED state and the second activity level is an RRC INACTIVE state.
15. The method of EEE 9, further comprising indicating, to the base station, at least one of:
   a cause for the selected SCG activation level; or
   a measurement associated with the selected SCG activation level.

## Claims

1. A wireless transmit/receive unit (WTRU), comprising:
a processor configured to:
receive, from a network, a first message, wherein the first message indicates to the WTRU to transition to a first activity level;
receive, from the network, a second message, wherein the second message indicates to the WTRU to deactivate a secondary cell group (SCG);
based on the second message, resume a connection with the SCG in a deactivated state;
determine an arrival of uplink (UL) data that is associated with a bearer;
send, to the network, a third message, wherein the third message is sent based on the UL data being associated with the bearer, and wherein the third message requests the SCG to be in an activated state;
receive, from the network, a fourth message, wherein the fourth message indicates to the WTRU to activate the SCG; and
activate the SCG based on the fourth message.

2. The WTRU of claim 1, wherein the processor is further configured to:
send the UL data using the SCG.

3. The WTRU of claim 1 or 2, wherein the third message indicates that the WTRU has the UL data associated with the bearer.

4. The WTRU of any of claims 1 to 3, wherein the bearer is a bearer type associated with the SCG.

5. The WTRU of any of claims 1 to 4, wherein the first message is a radio resource control (RRC) release message.

6. The WTRU of any of claims 1 to 5, wherein the second message is an RRC resume message.

7. The WTRU of any of claims 1 to 6, wherein the fourth message is an RRC reconfiguration message.

8. The WTRU of any of claims 1 to 7, wherein the first activity level is an INACTIVE state.

9. A method associated with a wireless transmit/receive unit (WTRU), comprising:
receiving, from a network, a first message, wherein the first message indicates to the WTRU to transition to a first activity level;
receiving, from the network, a second message, wherein the second message indicates to the WTRU to deactivate a secondary cell group (SCG);
based on the second message, resuming a connection with the SCG in a deactivated state;
determining an arrival of uplink (UL) data that is associated with a bearer;
sending, to the network, a third message, wherein the third message is sent based on the UL data being associated with the bearer, and wherein the third message requests the SCG to be in an activated state;
receiving, from the network, a fourth message, wherein the fourth message indicates to the WTRU to activate the SCG; and
activating the SCG based on the fourth message.

10. The method of claim 9, further comprising:
sending the UL data using the SCG.

11. The method of claim 9 or 10, wherein the third message indicates that the WTRU has the UL data associated with the bearer.

12. The method of any of claims 9 to 11, wherein the bearer is a bearer type associated with the SCG.

13. The method of any of claims 9 to 12, wherein the first message is a radio resource control (RRC) release message.

14. The method of any of claims 9 to 13, wherein the second message is an RRC resume message.

15. The method of any of claims 9 to 14, wherein the fourth message is an RRC reconfiguration message.
